# EUROPÄISCHE PATENTSCHRIFT

(11) **EP 1 890 789 B1**
(45) Veröffentlichungstag und Bekanntmachung des Hinweises auf die Patenterteilung: **18.11.2009**
(21) Anmeldenummer: 06708302.2
(22) Anmeldetag: 16.02.2006
(51) Int. Cl.: B01D 45/08, F24C 15/20

(54) **FILTERANORDNUNG FÜR DUNSTABZUGSHAUBE**
FILTER ARRANGEMENT FOR A RANGE HOOD
SYSTEME FILTRANT D'UNE HOTTE ASPIRANTE

(30) Priorität: 28.04.2005 DE 102005019831
(43) Veröffentlichungstag der Anmeldung: 27.02.2008
(73) Patentinhaber: BSH Bosch und Siemens Hausgeräte GmbH, 81739 München (DE)
(72) Erfinder: FEISTHAMMEL, Egon, 76437 Rastatt (DE); REIFF, Udo, 75438 Knittlingen (DE); ROSMANN, Dieter, 70174 Stuttgart (DE)
(74) Vertreter: Dosterschill, Peter
(86) Internationale Anmeldenummer: PCT/EP2006/060008
(87) Internationale Veröffentlichungsnummer: WO 2006/114342

(56) Entgegenhaltungen:
- EP-A- 0 438 676
- US-A- 2 751 901
- US-A- 4 105 422
- US-B1- 6 656 244
- PATENT ABSTRACTS OF JAPAN Bd. 1998, Nr. 06, 30. April 1998 (1998-04-30) & JP 10 054598 A (KANPAI:KK), 24. Februar 1998 (1998-02-24)

## Beschreibung

Die Erfindung betrifft eine Filteranordnung für eine Dunstabzugshaube zum Abscheiden von Partikeln und/oder Flüssigkeitstropfen aus einer die Filteranordnung durchströmenden Luftströmung, bestehend aus mindestens zwei ineinander liegenden Schalen.

Derartige Filteranordnungen sind beispielsweise aus der DE 197 53 687 A1 bekannt. Die dort beschriebene Filteranordnung ist ein kegelförmig ausgebildeter Fettfilter aus mehrlagigem Streckmetall. Die einzelnen Streckmetalllagen werden am Randbereich durch einen Kreisscheibenring verbunden.

Ein Nachteil dieser Filteranordnung besteht darin, dass sich in und zwischen den einzelnen Streckmetalllagen Partikel, wie beispielsweise Staub oder verharztes Öl, absetzen. Zur Reinigung dieser Filteranordnung sind daher ein hoher Wasserdruck und/oder hohe Temperaturen notwendig.

Eine weitere Filteranordnung wird in der DE 27 20 201 C2 beschrieben. Diese Filteranordnung ist ein Fettfanggitter, bei dem in einem Rahmen im Querschnitt bogenförmige, parallel angeordnete Lamellen in zwei Reihen versetzt zueinander verwendet werden und so eine Verwirbelung in dem Gitter erzeugt wird, die zu einer Abscheidung von Verunreinigungen in der Luft führt.

Die Lamellen sind fest in dem Rahmen gehalten, so dass die einander zugewandten Innenseiten der Lamellen von außen nicht zugänglich sind. Somit gestaltet sich auch die Reinigung dieses Fettfangfilters als schwierig.

Eine weitere Ausgestaltung einer Filteranordnung ist in US - A - 4 105 422 beschrieben. Die Filterelemente bestehen hier aus 2 Schalen mit jeweils U-förmigen Querschnitt, die mit Formelementen ausgestattet sind, über die sich die Schalen zu einem kastenförmigen Gehäuse fügen lassen. In der ersten Schale sind eine Vielzahl von Einlassröhren angeordnet, versetzt dazu sind in der zweiten Schale eine Vielzahl von Auslassröhren angeordnet.

Aufgabe der vorliegenden Erfindung ist es eine Filteranordnung zu schaffen, die einen einfachen Aufbau aufweist und insbesondere einfach zu reinigen ist.

Bei einer Filteranordnung der eingangs genannten Art wird diese Aufgabe dadurch gelöst, dass die Schalen lösbar miteinander verbunden sind.

Die lösbare Verbindung zwischen den Schalen kann durch einfaches Einbringen beziehungsweise Einsetzen einer Schale in eine weitere Schale erfolgen. Aufgrund dieser lösbaren Verbindung sind die Herstellung, die Handhabung und die Reinigung der Filteranordnung vereinfacht.

Die Schalen können separat voneinander hergestellt werden und dabei jeder Schale die gewünschte Geometrie verliehen werden. Ein Verbindungsschritt bei der Herstellung, wie beispielsweise das oben genannte Anbringen eines Kreisscheibenring und die Herstellung des Kreisscheibenrings, kann entfallen.

Weiterhin wird durch die lösbare Verbindung die Reinigung der Filteranordnung auch mit einfachen Mitteln, zum Beispiel unter laufendem Wasser, ermöglicht. Da die Schalen voneinander getrennt werden können, ist die Seite einer Schale, die einer weiteren Schale im Funktionszustand zugewandt ist, erreichbar und kann gereinigt werden. Dies ist bei fest miteinander verbundenen Filterlagen nicht möglich.

Zudem können die Schalen von dem Benutzer einer Dunstabzugshaube, in der diese Filteranordnung verwendet wird, händisch voneinander getrennt und auch wieder zusammengefügt werden. Die Verwendung von Werkzeug ist nicht notwendig.

Auch ein Austausch eines Teils der Filteranordnung, insbesondere einer der Schalen, ist bei der erfindungsgemäßen Filteranordnung möglich. So kann bei Beschädigung oder Abnutzung einer der Schalen nach längerem Gebrach diese Schale ausgetauscht werden, ohne die gesamte Filteranordnung ersetzen zu müssen.

Vorzugsweise ist an mindestens einer der Schalen der Filteranordnung ein Distanzhalter vorgesehen. Durch den Distanzhalter kann zwischen den sich zugewandten Seiten der Schalen ein Zwischenraum gebildet werden, durch den die Luftströmung geführt werden kann und in dem eine Abscheidung der genannten Partikel und/oder Flüssigkeitstropfe, die im Folgenden auch als Verunreinigungen bezeichnet werden, erfolgen kann. Aufgrund des Schalenaufbaus der Filteranordnung ist ein einziger Distanzhalter, der an einer der Schalen vorgesehen sein kann, ausreichend. Der Distanzhalter kann ein vertikaler Flansch am Rand einer der beiden Schalen sein, wodurch weder die Strömungsverhältnisse noch das Strömungsbild in dem Zwischenraum beeinflusst oder beeinträchtigt werden. Besonders bevorzugt ist der Distanzhalter mit einer der Schalen integral ausgestaltet. So kann der Flansch beispielsweise durch Biegen des oberen Randes der Schale erzeugt werden. Durch diese integrale Bauweise sind außer den Schalen keine weiteren Bauteile erforderlich und die Handhabung und Reinigung der Filteranordnung wird nicht erschwert.

Die Schalen bestehen vorzugsweise aus Blech und in das Blech sind bereichsweise Filteröffnungen eingebracht.

Die Verwendung eines Blechs, beispielsweise aus Aluminium oder rostfreiem Stahl, insbesondere als lackiertes Blech, als Material für die Schalen verleiht den Schalen im Vergleich zu Schalen aus einem Streckmetall eine höhere Stabilität. Zudem können über die geschlossenen Flächen des Blechmaterials flüssige Verunreinigungen, die zwischen den Schalen abgeschieden wurde, transportiert werden.

Um den Transport der Flüssigkeiten an den geeigneten Stellen gewährleisten zu können, sind in die Schalen jeweils nur bereichsweise Filteröffnungen eingebracht. Als Filteröffnung wird hierbei eine Öffnung bezeichnet, die der Luftführung in der Filteranordnung dient und die verschiedene Geometrien aufweisen kann. Dies kann beispielsweise eine Öffnung sein, über die gegebenenfalls mit Verunreinigungen beladene Luft, beispielsweise in Form von Dünsten oder Wrasen, zwischen benachbarte Schalen eindringt, oder eine Öffnung, aus der gereinigte Luft zwischen den Schalen austreten kann. Weiterhin werden Öffnungen, die in zwischengelagerten Schälen zwischen äußeren Schalen vorgesehen sind, und einen Durchtritt der zu reinigenden Luft ermöglichen, als Filteröffnungen im Sinne der Erfindung bezeichnet. Die Einbringung solcher Filteröffnungen in das Blech in vorgebbaren Bereichen hat neben der Transportmöglichkeit abgeschiedener Flüssigkeiten den weiteren Vorteil, dass die Filteröffnungen an Flächen der Schale vorgesehen werden können, an denen eine hohe Anströmung erfolgt.

Die Schalen weisen jeweils mindestens eine Seitenwand auf, die gegenüber einem Schalenboden nach oben abgewinkelt sind, und die Filteröffnungen sind in den Seitenwänden der Schalen vorgesehen. Auf diese Weise kann eine Randabsaugung erfolgen. Durch die zu dem Boden geneigte Ausrichtung der Seitenflächen wird zudem Flüssigkeit, die abgeschieden wird, aufgrund der Schwerkraft an den Seitenwänden nach unten in Richtung auf den Boden geleitet und kann dort gesammelt oder von dort abtransportiert werden. Die Seitenwände stehen vorzugsweise unter einem Winkel von 30 bis 45° zu dem Boden der Schale. Da die Schalen vorzugsweise einteilig hergestellt werden, das heißt der Boden und die Seitenwände ein gemeinsames Bauteil darstellen, kann dieser Winkel bereits bei der Herstellung der Schale festgelegt werden. Ein Ausrichten von Seitenelementen beim Einsetzen der Filteranordnung in eine Dunstabzugshaube entfällt.

Die Filteröffnungen benachbarter Schalen liegen bevorzugt versetzt zueinander. Durch die mindestens zwei Schalen wird auf diese Weise ein Wirbelstromfilter beziehungsweise Wirbelabscheider geschaffen. Da bei der vorliegenden Erfindung aufgrund des mehrteiligen Aufbaus die Filteröffnungen an definierten Stellen und mit einer geeigneten Geometrien ausgestaltet werden können, können auch die sich an den Schalen, beziehungsweise zwischen den Schalen ausbildenden Strömungsverhältnisse optimal eingestellt werden und dadurch ein erhöhter Abscheidungsgrad erzielt werden. Indem ein Wirbelabscheider gebildet wird, können auch die Abmaße der Filteröffnungen größer gewählt werden, als bei herkömmlichen Filtermaterialien, da die eigentliche Abscheidung nicht in den Filteröffnungen selber erfolgt. Ein Zusetzen der Filteröffnungen mit Verunreinigungen, wie dies bei Streckmetallfiltern auftritt, bei denen die Öffnungen in dem Streckmetall zur Filterung dienen, kann bei der erfindungsgemäßen Filteranordnung daher weitestgehend vermieden werden.

Die Filteröffnungen können gemäß einer Ausführungsform zumindest teilweise Rundlöcher oder Rundlochungen darstellen. Eine solche Geometrie ist bei Wirbelstromfiltern, die aus Profilelementen hergestellt werden, nicht oder nur unter Verwendung einer erheblichen Anzahl von Einzelelementen möglich. Bei der Erfindung kann dies hingegen durch Lochung des Blechmaterials der Schale erfolgen. Insofern ist bei der Erfindung die Herstellung einer geeigneten Geometrie wesentlich vereinfacht.

An den Rand der Filteröffnungen können vorzugsweise Düsengeometrien angeformt sein. Insbesondere stellten die Düsengeometrien Wände dar, die entlang des Randes der jeweiligen Filteröffnung von der Ebene, in der diese Öffnung vorgesehen ist hervorsteht. Diese Düsengeometrien können neben der relativen Ausrichtung der Filteröffnung unterschiedlicher Schalen zueinander zur Einstellung des gewünschten Strömungsbildes in der Filteranordnung führen. Durch die Düsengeometrie kann die Strömung in der Filteranordnung gezielt geführt werden. Trifft ein so gerichteter Strahl auf die benachbarte Schale auf, so ist der Abscheidungsgrad aufgrund der höheren Geschwindigkeit gegenüber einer nicht beschleunigten Strömung vergrößert.

Die Düsengeometrien sind vorzugsweise integrale Bestandteile des Blechs der Schale. Die Geometrien beziehungsweise die diese bildenden Wände, können durch Stanzen, Tiefziehen oder andere geeignete Verfahren aus dem Blechmaterial bei der Erzeugung der Filteröffnung geformt werden. Indem die Düsengeometrien integrale Bestandteile des Bleches darstellen, bleibt die Anzahl der Bauteile der Filteranordnung weiterhin auf die Anzahl der Schalen beschränkt. Das Zusammensetzen der Filteranordnung und die Reinigung derselben wird durch die Düsengeometrie somit nicht nachteilig beeinflusst.

Die Schalen können erfindungsgemäß beschichtet sein. Eine Beschichtung mit beispielsweise Kunststoff oder Teflon ist bei den Schalen möglich, da wie oben beschrieben, die Filteröffnungen verhältnismäßig groß sein können und ein Zusetzen dieser Öffnungen bei dem Beschichtungsvorgang, wie dies bei Streckmetall oder Lochblechen, der Fall ist, nicht zu befürchten ist. Da in der erfindungsgemäßen Filteranordnung das Blechmaterial der Schalen zudem zum Abtransport abgeschiedener Verunreinigungen dient, ist eine Beschichtung besonders vorteilhaft. Diese kann das Abfließen abgetrennter Verunreinigungen unterstützen. Zudem erleichtert eine Beschichtung die Reinigung der Schalen und damit der Filteranordnung.

Die Schalen weisen vorzugsweise eine Pyramidenstumpfform auf. Besonders bevorzugt wird eine quadratische Pyramidenstumpfform verwendet. Eine Pyramidenstumpfform ist bei der erfindungsgemäßen Filteranordnung besonders vorteilhaft, da, aufgrund der vier Seitenwände und den zwischen diesen ausgebildeten Kanten, die relative Position von Filteröffnungen der einzelnen Schalen zueinander im zusammengebauten Zustand der Filteranordnung vorbestimmt ist. Die Kanten zwischen benachbarten Seitenflächen einer Schale dienen als Ausrichtungshilfe. Bei der Form eines Kegelstumpfes müssten hingegen zusätzliche Ausrichtungshilfen, beispielsweise in Form von Nuten, vorgesehen werden. Diese können bei dem bevorzugten Aufbau entfallen.

Zudem können bei der Pyramidenstumpfform die Seitenwände der Schalen aufgrund ihrer Neigung das Abfließen der Flüssigkeit unterstützen. Weiterhin wird durch den Winkel unter dem die Seitenwände zu dem Boden der Schale steht, die Fläche der Seitenwände, die als Anströmfläche dient, vergrößert. Auf diese Weise kann die Abscheidung von Verunreinigungen gegenüber einer Ausführungsform mit senkrecht zu dem Boden stehenden Seitenflächen noch verstärkt werden.

In einer weiteren Ausführungsform umfasst die Filteranordnung drei Schalen. Hierbei weisen die obere und die untere Schale Düsengeometrien an den Filteröffnungen auf, die einander zugewandt sind. Zwischen diesen beiden Schalen ist eine mittlere Schale eingefügt, bei der an den Rändern der darin vorgesehenen Filteröffnungen keine Düsengeometrien angeformt sind. In diesem Fall sind vorzugsweise die Filteröffnungen der oberen und der unteren Schale miteinander ausgerichtet und die Filteröffnungen der mittleren Schale zu diesen versetzt. Das zwischen den Filteröffnungen der mittleren Schale verbleibende Blechmaterial kann daher als Prallplatte für eine eintretende Luftströmung dienen. Mit diesem dreiteiligen Aufbau kann der Abscheidungsgrad von Verunreinigungen aus der Luft erhöht werden. Zudem ist der konstruktive Aufwand bei dem schalenförmigen Aufbau der Filteranordnung gering, da nur eine zusätzliche Schale vorgesehen werden muss. Die Ausrichtung der Filteröffnungen der einzelnen Schalen zueinander wird erneut bereits bei der Herstellung der Schalen festgelegt, so dass die Handhabung der Filteranordnung einfach ist und es insbesondere keinen Ausrichtens bedarf.

Die Erfindung wird im Folgenden anhand der beiliegenden Figuren erneut beschrieben.

Es zeigen:
- Figur 1:: eine schematische perspektivische Unteransicht einer Dunstabzugshaube;
- Figur 2:: eine schematische Explosionsansicht einer Ausführungsform der erfindungsgemäßen Filteranordnung,
- Figur 3:: eine schematische Schnittansicht durch einen Teil einer Seitenwand der Filteranordnung nach Figur 2;
- Figur 4:: eine schematische Schnittansicht einer Ausführungsform der Düsengeometrie an einer Schale einer weiteren Ausführungsform der Filteranordnung; und
- Figur 5:: eine schematische Schnittansicht durch eine Seitenwand einer Filteranordnung mit drei Schalen.

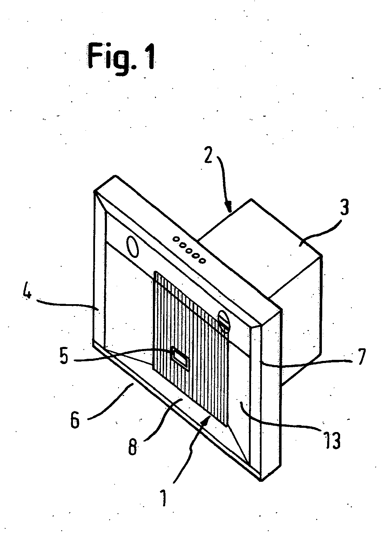

In Figur 1 ist eine Ausführungsform einer erfindungsgemäßen Filteranordnung 1 in dem, in einer Dunstabzugshabe 2 eingebauten, Zustand gezeigt. Die Dunstabzugshaube 2 weist ein Gehäuse 3 und einen unterhalb des Gehäuses 3 angeordneten Wrasenschirm 4 auf. An der Vorderseite des Wrasenschirms 4 sind Bedienelemente, wie beispielsweise Schalter, 5 vorgesehen. An der Unterseite des Wrasenschirms 4 sind zudem Beleuchtungselemente 6 vorgesehen gezeigt.

In der Unterseite des Wrasenschirms 4 ist eine Absaugöffnung 7 gebildet, die von Schirmblechen 8 umgeben ist, die auf die Absaugöffnung 7 zulaufen. Hierdurch können Dünste beziehungsweise Wrasen, die die Unterseite des Wrasenschirms 4 anströmen, auf die Absaugöffnung 7 hin geleitet werden. Die Absaugöffnung 7 ist von der Filteranordnung 1 abgedeckt.

Die Filteranordnung 1 besitzt eine quadratische Pyramidenstumpfform, die von dem Rand der Absaugöffnung 7 nach unten herausragt. Am Boden 9 des Pyramidenstumpfes ist in der dargestellten Ausführungsform ein Sammelbehälter 13 befestigt. Der Sammelbehälter 13 kann eine Ölwanne sein, die über einen Fettablasshahn (nicht dargestellt), entleert werden kann oder abgenommen werden kann, um diese zu entleeren. Der Füllgrad der Ölwanne kann durch einen Schwimmer, der mit einer Skale verbunden ist, angezeigt werden. Es ist auch möglich ein Vlies in der Ölwanne vorzusehen und dieses bei Sättigung durch ein neues auszutauschen.

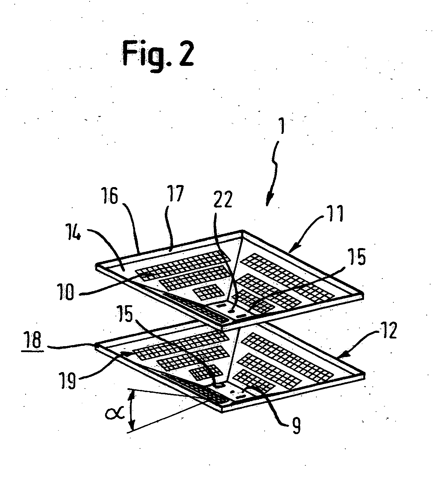

Die Filteranordnung 1 besitzt den in der Figur 2 gezeigten Aufbau. Die Filteranordnung 1 besteht aus einer Oberschale 11 und einer Unterschale 12. Diese sind nicht fest miteinander verbunden, sondern die Oberschale 11 wird in die Unterschale 11 eingesetzt. Jede der Schalen 11, 12 besitzt einen Boden 9 sowie vier sich an den Rand des Bodens 9 anschließende Seitenwände 14. Die Seitenwände 14 stehen unter einem Winkel α, der vorzugsweise zwischen 30° und 45° liegt, zu dem Boden 9 der Schale 11, 12. Die Breite der Seitenwände 14 vergrößert sich von deren Unterseite 15 an der diese mit dem Boden 9 verbunden ist, zu deren Oberkante 16.

An der Oberkante 16 ist an jeder der Seitenwände 14 ein Flansch 17 vorgesehen. Die Flansche 17 der Seitenwände 14 einer Schale 11, 12 bilden zusammen einen umlaufenden Flansch 18 an der Oberkante der Schalen 11, 12.

Der umlaufende Flansch 18 verläuft von der Oberkante 16 der Schale 11, 12 vertikal nach oben. Die Abmessungen der beiden Schalen 11 und 12, insbesondere die Breite der Seitenwände 14 und die Breite und Länge der Böden 9 sind bei den beiden Schalen 11, 12 identisch. Somit liegt die Oberschale 11 an der Oberkante 16 von den Seitenwänden 14 dieser Schale 11 auf dem Flansch 18 der Unterschalte 12 auf.

Durch die Höhe des Flansches 18 wird der Abstand zwischen den benachbarten Seitenflächen 14 der Oberschale 11 und der Unterschale 12, sowie zwischen den Böden 9 der Oberschale 11 und der Unterschale 12 bestimmt. Obwohl in der dargestellten Ausführungsform auch an der Oberschale 11 ein Flansch 18 vorgesehen ist, kann diese auch ohne Flansch ausgebildet sein oder der Flansch kann nach unten abgewinkelt sein, um den Halt der Oberschale 11 auf der Unterschale 12 zu verbessern.

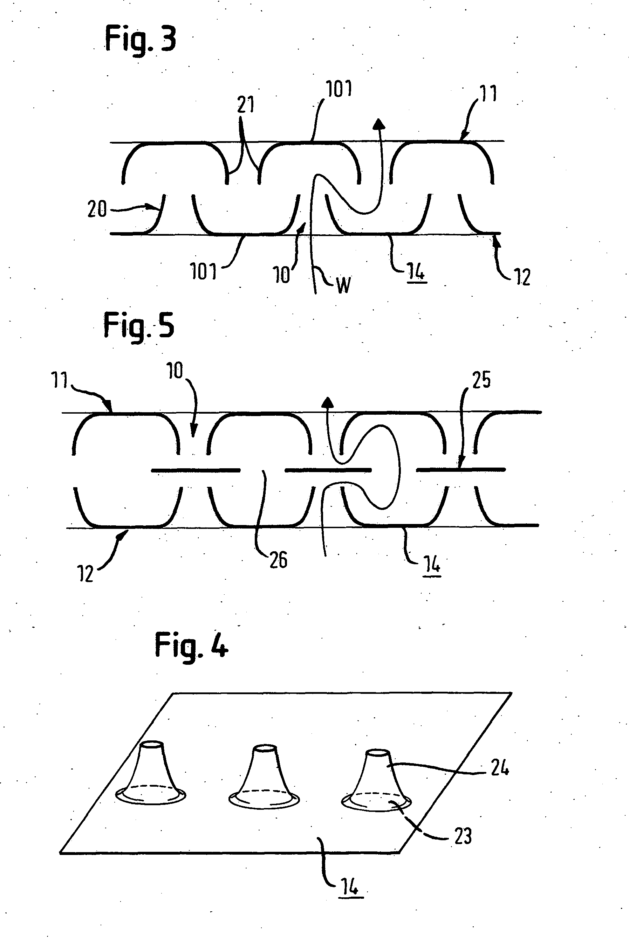

An den Seitenflächen 14 der Ober- und Unterschale 11, 12, sind Schlitze 10 eingebracht, die als Filteröffnungen dienen. Diese Schlitze 10 erstrecken sich in der Längsrichtung der Seitenflächen 14, das heißt in der Richtung von deren Oberkante 16 zu der Unterkante 15. In jeder Seitenfläche 14 sind drei beabstandete Reihen 9 von Schlitzen 10 über die Höhe der Seitenfläche verteilt. Die Schlitze 10 liegen parallel zueinander. Die Anzahl der Schlitze 10 in den drei Reihen 9 nimmt von der oberen zur unteren Reihe aufgrund der Verkleinerung der Seitenfläche 14 zu dem Boden 9 hin ab. Die Schlitze 10 einer Reihe 9 der Oberschale 11 liegen zu den Schlitzen 10 der entsprechenden Reihe 9 der Unterschale 12 um eine halbe Teilung versetzt. Dies ist schematisch in Figur 3 verdeutlicht, bei der eine schematische Schnittansicht durch eine aus zwei Schalen 11, 12 bestehenden Filteranordnung 1 gezeigt ist. An den Schlitzen 10 sind Düsengeometrien 20 angeprägt. Diese Düsengeometrien 20 stellen im wesentlichen Wände 21 dar, die entlang des Randes der Schlitze 10 von diesen aus der Ebene der Seitenwand 14 hervorstehen. Die Düsengeometrien 20 der Oberschale 11 und der Unterschale 12 sind einander zu gewandt aber um eine halbe Teilung versetzt. So stehen in Figur 3 die Wände 21 der Oberschale 11 nach unten und die Wände 21 der Unterschale 12 nach oben über die jeweilige Seitenwand 14 hervor. Die Übergänge von der Seitenfläche 14 zu den Wanden 21 der Düsengeometrie 20 erfolgt über einen Radius. Dadurch können scharfe Ecken vermieden werden, an denen sich Verschmutzungen absetzen könnten und die bei der Reinigung nur schwer zu erreichen sind.

Der Abstand zwischen der Oberschale 11 und der Unterschale 12 wird so gewählt, dass die Düsengeometrie 20 an dem Ende, das der Schale 11, 12, an der diese vorgesehen ist, noch einen lichten Abstand zu der jeweils anderen Schale 12, 11 besitzt. Durch diese Anordnung wird ein Wirbelstromfilter beziehungsweise Wirbelabscheider erzeugt.

In den zwischen den Schalen 11 und 12 gebildeten Zwischenraum kann Wrasen W, der die Dunstabzugshaube 2 von unten anströmt, über die Schlitze 10 der Unterschale 12 eintreten. Nach dem Verlassen der Düsengeometrie 20 der Unterschale 12 besitzt der Wrasen eine hohe Geschwindigkeit. Mit dieser hohen Geschwindigkeit trifft dieser auf den zwischen zwei Schlitzen 10 in der Oberschale 11 gebildeten Steg 101 auf. Durch den Aufprall wird der Wrasen W umgelenkt und wird auf einen Steg 101, der zwischen zwei Schlitzen 10 in der Unterschale 12 gebildet ist gelenkt. Auch an diesem Steg 101 prallt der Strahl auf und kann über die Schlitze 10 in der Oberschale 11 austreten. Durch die Verwirbelung und den Aufprall des Wrasens W in der Filteranordnung werden Verunreinigungen, wie beispielsweise Fett aus dem Wrasen W abgetrennt.

Diese Verunreinigungen können entlang der Stege 101 der Oberschale 11 und der Unterschale 12 und den zwischen den Kanten der Pyramidenform und den Schlitzen 10 verbleibenden Blechflächen nach unten in Richtung Boden 9 laufen. In dem Boden 9 sind Ablassöffnungen 22 vorgesehen, über die die abgeschiedene Flüssigkeit in einen Sammelbehälter 13 oder an ein Abführsystem (nicht dargestellt) geleitet werden kann.

Die Geometrie der Düsen an den Filteröffnungen ist nicht auf die dargestellte Schlitzform beschränkt. So können beispielsweise auch Rundlochungen 23 mit angeprägter Düse 24 verwendet werden. Eine solche Geometrie ist schematisch in Figur 4 gezeigt. Es ist auch möglich unterschiedliche Durchtrittsgeometrien miteinander zu kombinieren. So können in einer Schale Rundlochungen und Schlitze vorgesehen sein. An einer mit dieser Schale zusammenwirkenden weiteren Schale werden dann die entsprechenden Filteröffnungen versetzt vorgesehen.

In Figur 5 ist eine schematische Schnittansicht durch einen Teil einer Seitenwand 14 einer Filteranordnung 1 mit drei Schalen 11, 12, 25 gezeigt. Die Oberschale 11 und die Unterschale 12 weisen im Wesentlichen den gleichen Aufbau auf, wie die in der Figur 2 gezeigten Schalen 11, 12. Allerdings sind bei dieser Ausführungsform die Schlitze 10 in den Seitenwänden 14 der Oberschale 11 und Unterschale 12 gegeneinander ausgerichtet, das heißt liegen über einander. In der Zwischenschale beziehungsweise mittleren Schale 25 sind ebenfalls Schlitze 26 vorgesehen. Diese weisen allerdings keine Düsengeometrien auf, sondern sind Aussparungen in den Seitenwänden 14 der Zwischenschale 25. Diese Schlitze 26 sind zu den Schlitzen 10 versetzt angeordnet.

Der über die Schlitze 10 der Unterschale 12 in die Filteranordnung eintretende Wrasen W prallt somit beim Verlassen der Düsengeometrie 20 auf den zwischen zwei Schlitzen 26 der Zwischenschale gebildeten Steg auf. Von dort wird der Wrasen W in Richtung auf die Oberseite der Unterschale 12 gelenkt. Anschließend durchtritt der Wrasen W die Schlitze 26 und prallt auf die Unterseite der Oberschale 11 auf. Von dort wird er auf die Oberseite der Zwischenschale 25 gelenkt, um von dort durch die Düsengeometrie 20 der Schlitze 10 der Oberschale 11 und die Schlitze 10 der Oberschale 11 aus der Filteranordnung auszutreten. Bei diesem Aufprall und den erfolgten Umlenkungen des Wrasens W werden die darin enthaltenen Verunreinigungen herausgeschleudert. Die die Filteranordnung 1 verlassende Luft ist somit gereinigt. Die Abscheidung der Verunreinigungen ist bei dieser dreischichtigen Anordnung aufgrund des Aufpralls auf die Zwischenschale 25 und die erhöhte Anzahl an Richtungsänderungen verbessert.

Die Erfindung ist nicht auf die dargestellten Ausführungsformen beschränkt. In der Filteranordnung kann beispielsweise der Oberschale ein weiteres Filterelement, wie beispielsweise ein Streckmetallfilter, nachgeschaltet sein. Dieses kann in der Oberschale eingebracht sein und somit ebenfalls eine Pyramidenstumpfform aufweisen oder die Öffnung des Pyramidenstumpfes der Oberschale ist mit einem plattenförmigen Filterelement abgedeckt. Weiterhin kann die Form der Schalen eine Kegelstumpfform sein, bei der in der Mantelfläche des Kegelstumpfes die Filteröffnungen vorgesehen sind.

Die erfindungsgemäße Filteranordnung bietet sich insbesondere für Dunstabzugshauben an, die über Kochbereichen eingesetzt werden, an denen im wesentliche dünnflüssige und eher nicht harzende Öle, wie beispielsweise pflanzliche Öle eingesetzt werden an. Zudem kann die erfindungsgemäße Filteranordnung in Regionen vorteilhaft verwendet werden, in denen die Reinigungsmöglichkeiten in Ermangelung von Spülmaschinen begrenzt sind. Dies gilt insbesondere aus dem Grund, dass die erfindungsgemäße Filteranordnung fast selbstreinigend wirkt. Die abgeschiedenen Flüssigkeiten können an den Seitenwänden der Schalen herunter laufen und entfernt oder gesammelt werden.

## Patentansprüche

1. Filteranordnung für eine Dunstabzugshaube (2) mit einem Gehäuse und einem unterhalb des Gehäuses angeordneten Wrasenschirm, zum Abscheiden von Partikeln und/oder Flüssigkeitstropfen aus einer die Filteranordnung (1) durchströmenden Luftströmung (W), bestehend aus mindestens zwei ineinander liegenden Schalen (11, 12, 25), in denen Filteröffnungen (10, 23, 26) vorgesehen sind, **dadurch gekennzeichnet, dass** die Schalen (11, 12, 25) lösbar miteinander verbunden sind und Seitenwände aufweisen, die gegenüber einem Schalenboden (9) abgewinkelt sind, und die Filteröffnungen (10, 23, 26) in den Seitenwänden (14) der Schalen (11, 12, 25) vorgesehen sind, wobei die Schalen (11, 12, 25) jeweils einteilig hergestellt sind, sodass der Schalen boden (9) und die Seitenwände (14) in gemeinsames Bauteil bilden.

2. Filteranordnung nach Anspruch 1, **dadurch gekennzeichnet, dass** an mindestens einer der Schalen (11, 12, 25) der Filteranordnung ein Distanzhalter (18) vorgesehen ist.

3. Filteranordnung nach einem der Ansprüche 1 oder 2, **dadurch gekennzeichnet, dass** die Schalen aus Blech bestehen und in das Blech bereichsweise Filteröffnungen eingebracht sind.

4. Filteranordnung nach einem der Ansprüche 1 bis 3, **dadurch gekennzeichnet, dass** die Filteröffnungen (10, 23, 26) benachbarter Schalen (11, 12, 25) versetzt zueinander liegen.

5. Filteranordnung nach einem der Ansprüche 1 bis 4, **dadurch gekennzeichnet, dass** zumindest ein Teil der Filteröffnungen Rundlöcher (23) darstellen.

6. Filteranordnung nach einem der Ansprüche 1 bis 5, **dadurch gekennzeichnet, dass** an den Rand der Filteröffnungen (10, 23) Düsengeometrien (20, 24) angeformt sind.

7. Filteranordnung nach Anspruch 6, **dadurch gekennzeichnet, dass** die Düsengeometrie (20, 24) integrale Bestandteile der Schale (11, 12) sind.

8. Filteranordnung nach einem der Ansprüche 1 bis 7, **dadurch gekennzeichnet, dass** die Schalen (11, 12) beschichtet sind.

9. Filteranordnung nach einem der Ansprüche 1 bis 8, **dadurch gekennzeichnet, dass** die Schalen (11, 12) eine Pyramidenstumpfform besitzen.

## Claims

1. Filter arrangement for a fume extractor hood (2) with a housing and a fume screen arranged below the housing, for separation of particles and/or drops of liquid from an air flow (W) flowing through the filter arrangement (1), consisting of at least two shells (11, 12, 25), which lie one in the other and in which filter openings (10, 23, 26) are provided, **characterised in that** the shells (11, 12, 25) are detachably connected together and have side walls which are angled relative a shell base (9) and the filter openings (10, 23, 26) are provided in the side walls (14) of the shells (11, 12, 25), wherein the shells (11, 12, 25) are each produced integrally so that the shell base (9) and the side walls (14) form a common component.

2. Filter arrangement according to claim 1, **characterised in that** a spacer (18) is provided at at least one of the shells (11, 12, 25) of the filter arrangement.

3. Filter arrangement according to one of claims 1 and 2, **characterised in that** the shells consist of sheet metal and filter openings are formed in the sheet metal in regions.

4. Filter arrangement according to any one of claims 1 to 3, **characterised in that** the filter openings (10, 23, 26) of adjacent shells (11, 12, 25) are offset relative to one another.

5. Filter arrangement according to any one of claims 1 to 4, **characterised in that** round holes (23) represent at least a part of the filter openings.

6. Filter arrangement according to any one of claims 1 to 5, **characterised in that** nozzle geometries (20, 24) are formed at the edge of the filter openings (10, 23).

7. Filter arrangement according to claim 6, **characterised in that** the nozzle geometries (20, 24) are integral components of the shell (11, 12).

8. Filter arrangement according to any one of claims 1 to 7, **characterised in that** the shells (11, 12) are coated.

9. Filter arrangement according to any one of claims 1 to 8, **characterised in that** the shells (11, 12) have the form of a frustum of a pyramid.

## Revendications

1. Système filtrant pour une hotte aspirante (2) comprenant un boîtier et un écran anti-buée disposé en dessous du boîtier, destiné à évacuer des particules et/ou des gouttes de liquide hors d'un courant d'air (W) traversant le système filtrant (1), constitué d'au moins deux coques (11, 12, 25) situées l'une dans l'autre, dans lesquelles des ouvertures filtrantes (10, 23, 26) sont ménagées, **caractérisé en ce que** les coques (11, 12, 25) sont raccordées entre elles de manière amovible et présentent des parois latérales qui sont angulaires par rapport à un fond de coque (9), et **en ce que** les ouvertures filtrantes (10, 23, 26) sont ménagées dans les parois latérales (14) des coques (11, 12, 25), les coques (11, 12, 25) étant respectivement fabriquées d'une seule pièce, de sorte que le fond de coque (9) et les parois latérales (14) forment un composant commun.

2. Système filtrant selon la revendication 1, **caractérisé en ce qu'**un support d'écartement (18) est ménagé sur au moins une des coques (11, 12, 25) du système filtrant.

3. Système filtrant selon l'une quelconque des revendications 1 ou 2, **caractérisé en ce que** les coques sont constituées de tôle et **en ce que** des ouvertures filtrantes sont insérées en partie dans la tôle.

4. Système filtrant selon l'une quelconque des revendications 1 à 3, **caractérisé en ce que** les ouvertures filtrantes (10, 23, 26) de coques avoisinantes (11, 12, 25) sont situées de manière décalée les unes par rapport aux autres.

5. Système filtrant selon l'une quelconque des revendications 1 à 4, **caractérisé en ce qu'**au moins une partie des ouvertures filtrantes représente des trous circulaires (23).

6. Système filtrant selon l'une quelconque des revendications 1 à 5, **caractérisé en ce que** des géométries en forme de buse (20, 24) sont formées sur le bord des ouvertures filtrantes (10, 23).

7. Système filtrant selon la revendication 6, **caractérisé en ce que** la géométrie en forme de buse (20, 24) est une partie composante de la coque (11, 12).

8. Système filtrant selon l'une quelconque des revendications 1 à 7, **caractérisé en ce que** les coques (11, 12) sont enduites.

9. Système filtrant selon l'une quelconque des revendications 1 à 8, **caractérisé en ce que** les coques (11, 12) possèdent une forme de tronc de pyramide.
